# Europäisches Patentamt

# European Patent Office

# Office européen des brevets

(19)

(11) Veröffentlichungsnummer: 0 116 152

A2

(12) ## EUROPÄISCHE PATENTANMELDUNG

(21) Anmeldenummer: 83112590.1

(22) Anmeldetag: 14.12.83

(51) Int. Cl.³: **B 65 G 1/04**

(30) Priorität: 14.12.82 DE 3246191
15.12.82 DE 3246408

(43) Veröffentlichungstag der Anmeldung:
22.08.84 Patentblatt 84/34

(84) Benannte Vertragsstaaten:
AT BE CH DE FR GB IT LI LU NL SE

(71) Anmelder: GOLDBECKBAU GMBH & CO. KG
Bokelstrasse 10
D-4800 Bielefeld 14(DE)

(72) Erfinder: Kochbeck, Udo
Bandelstrasse 16
D-4800 Bielefeld 1(DE)

(72) Erfinder: Goldbeck, Ortwin
Eisenstrasse 37
D-4800 Bielefeld 14(DE)

(74) Vertreter: Patentanwälte TER MEER - MÜLLER -
STEINMEISTER
Triftstrasse 4
D-8000 München 22(DE)

(54) Vorrichtung zur Einlagerung und Entnahme von stangenförmigem Material.

(57) Eine Vorrichtung zur Einlagerung und Entnahme von stangenförmigem Material in bzw. aus wenigstens einem Lagerregal umfaßt einen entlang der Entnahmeseite des Lagerregals verfahrbaren Wagen, der eine anhebbare und absenkbare Bühne aufweist. Die Bühne umfaßt einen Tisch (22) mit einer senkrecht zur Entnahmeseite des Lagerregals (20) gerichteten, auf parallelen Rollen (46) gebildeten Rollenbahn und eine entlang einer Seite der Rollenbahn verlaufenden, durch auskragende Tragarme (42) gebildeten Ablagefläche. Entlang der anderen Seite der Rollenbahn erstreckt sich eine Arbeitsplattform (24). Dem Wagen ist ein Ablagetisch zugeordnet, auf den Stahl-Kommissionen von der Ablagefläche der Bühne überführt werden können und der als Puffer zwischen der Kommissionierung und dem Abtransport der Stähle dient.

EP 0 116 152 A2

FIG. 1

## BESCHREIBUNG

Die Erfindung betrifft eine Vorrichtung zur Einlagerung und Entnahme von stangenförmigem Material in bzw. aus wenigstens einem Lagerregal, mit einem entlang der Entnahmeseite des Lagerregals verfahrbaren Wagen, einer in bezug auf diesen anhebbaren und absenkbaren Bühne und einer Ablage zur Aufnahme des ausgelagerten Stahls bei der Kommissionierung.

Die Einlagerung von stangenförmigen Stählen in gestellförmigen Regalen ist bekannt. Einlagerung und Entnahme können mit Hilfe eines Laufkrans oder auch einer entlang der Entnahmeseite des Regals verfahrbaren Hebebühne erfolgen. Derartige Hebebühnen sind beweglicher und leichter zu steuern als ein Deckenlaufkran und insbesondere dann vorteilhaft, wenn es nicht um die Einlagerung oder Entnahme einer größeren Anzahl ein und desselben Stahls, sondern um die Zusammenstellung einer sogenannten Kommission, d.h., eine Lieferung aus unterschiedlichen Stählen geht. Auf diesen Vorgang des Kommissionierens sind die herkömmlichen Hebebühnen unzureichend eingerichtet. Zumeist ist es erforderlich, die Hebebühne für jede einzelne Stahlsorte einer Kommission zwischen dem Lagergestell und einer Sammelstelle hin- und herzubewegen. Dies ist nicht nur zeitraubend, sondern insbesondere dann nachteilig, wenn eine Kommission unmittelbar auf einem bereitgestellten Transportfahrzeug zusammengetragen wird, da dieses Fahrzeug während der gesamten Kommissionierungszeit blockiert wird und nicht für eigentliche Transportaufgaben genutzt werden kann.

Es besteht zwar die Möglichkeit, eine Reihe von Kommissionen unabhängig vom Eintreffen eines Transportfahrzeugs zusammenzustellen und zunächst beispielsweise auf dem Hallenboden abzulegen, jedoch ist das Absenken der Stähle auf den Boden und das erneute Aufgreifen der Stähle vom Boden mit Hilfe der verwendeten Hub- und Fördereinrichtungen zumeist schwierig, und es kommt verhältnismäßig rasch zu einer Blockierung der verfügbaren Durchgänge und Freiflächen.

Der Erfindung liegt die Aufgabe zugrunde, eine Vorrichtung der gattungsgemäßen Art zu schaffen, die insbesondere zum Kommissionieren einer Lieferung aus unterschiedlichen Stählen geeignet ist und vor allem die Möglichkeit bietet, daß sowohl bei der Kommissionierung als auch beim Abtransport der zusammengestellten Kommissionen kontinuierlich, aber unabhängig voneinander gearbeitet werden kann.

Diese Aufgabe wird erfindungsgemäß bei einer Vorrichtung der eingangs genannten Art mit einer Hebebühne dadurch gelöst, daß die Bühne einen Tisch mit einer senkrecht zur Entnahmeseite des Lagerregals gerichteten, aus parallelen Rollen gebildeten Rollenbahn und einer entlang einer Seite der Rollenbahn verlaufenden, durch auskragende Tragarme gebildeten Ablagefläche umfaßt, und daß entlang der anderen Seite der Rollenbahn eine Arbeitsplattform vorgesehen ist.

Durch Verfahren der Hebebühne entlang der Entnahmeseite eines Lagerregals und durch Anheben und Absenken der Bühne kann die Rollenbahn vor jedes beliebige Fach eines Lagerregals gebraucht werden, so daß die in diesem befindlichen Stähle von Hand oder mit Hilfe eines geeigneten Mechanismus auf die Rollenbahn gezogen und sodann parallel auf die Ablagefläche verschoben werden können. Dieser Vorgang kann in bezug auf verschiedene Fächer eines Lagerregals wiederholt werden, bis eine bestimmte Kommission zusammengestellt ist. Anschließend kann die Hebebühne beispielsweise vor einen aus parallelen Trägern gebildeten Ablagetisch gefahren werden, und die gesammelten Stähle können durch Absenken der Tragarme zwischen und unter die parallelen Träger auf dem Ablagetisch abgelegt werden. Von diesem Ablagetisch aus erfolgt die Verladung auf ein Transportfahrzeug. Auf diese Weise ist der Kommissionierungsvorgang unabhängig von dem anschließenden Verlade- und Transportvorgang, so daß eine gegenseitige Blockierung beider Tätigkeiten entfällt.

Von dem Wagen der Hebebühne geht vorzugsweise ein senkrecht aufragender Rahmen aus, an dem die Bühne mit dem Tisch und der Arbeitsplattform geführt und mit Hilfe von Seilzügen oder dergleichen anhebbar oder absenkbar ist.

Die anhebbare und absenkbare Bühne weist vorzugsweise eine Reihe von weiteren Einrichtungen auf, die das Einlagern und Entnehmen von Stählen und insbesondere das Kommissionieren erleichtert. So kann beispielsweise an einem oberhalb der Arbeitsplattform vorgesehenen Schutzdach, das das Bedienungspersonal gegen Verletzungen schützt, eine oberhalb der Rollenbahn geführte Laufkatze oder dergleichen angeordnet sein, die es ermöglicht, mit Hilfe einer Kette oder eines Seiles Stähle aus einem Regalfach auf die Rollenbahn herauszuziehen. Die Rollenbahn und/oder die Ablagefläche können über Druck- oder Zugmeßdosen an der Bühne abgestützt werden, so daß das Gewicht der zusammengestellten Stähle unmittelbar festgestellt werden kann.

Die Rollen können in Längsrichtung geteilt sein, so daß zwei getrennt nutzbare Rollenbahnen entstehen, von denen eine vorübergehend als Ablagefläche genutzt werden kann, während auf der anderen Rollenbahn weitere Stähle aus dem Regal herausgezogen werden.

Es kann im übrigen eine Umreifungsvorrichtung vorgesehen sein, die es ermöglicht, eine Kommission unmittelbar auf der Bühne zu bündeln.

Ein gesamter Kommissionierungsvorgang kann also abgeschlossen werden, ohne daß die Hebebühne die Position vor dem Lagerregal verlassen muß. Ggf. können sogar mehrere kleinere Kommissionen in einem Durchgang gebildet werden.

In Verbindung mit der bereits geschilderten, oberhalb der Rollenbahn beweglichen Laufkatze können ausklappbare Druckplatten vorgesehen sein, die es ermöglichen, Stähle in
ein Regalfach hineinzuschieben.

Weiterhin ist vorzugsweise ein Querförderer vorgesehen,
der in die Tragarme des Tisches integriert ist und in
Längsrichtung der Tragarme verschiebbare Trägerprofile umfaßt, die über die obere Oberfläche der Rollen und der Tragarme anhebbar und unter diese absenkbar sind und das Umsetzen von Stählen von den Rollen auf die Ablagefläche und
umgekehrt ermöglichen.

Der erfindungsgemäße Ablagetisch umfaßt wenigstens zwei
parallele Träger, jeweils wenigstens zwei diese aufnehmende Stützen sowie wenigstens eine Transporteinrichtung zur
Parallelverschiebung von auf den Trägern liegenden Stählen.

Auf einem derartigen Ablagetisch werden die einzelnen Stähle
oder Stahlbündel einer Kommission durch einen Kran, eine
fahrbare Hubbühne, einen Gabelstapler oder dergleichen abgelegt. Da der Tisch aus parallelen, in Abstand liegenden
Trägern mit im wesentlichen freiem Zwischenraum besteht,
können die Stähle in diesem Zwischenraum durch die verwendeten Greif- oder Huborgane ohne weiteres erfaßt werden. Der
Ablagetisch kann im wesentlichen die Höhe der Lageplattform
eines üblichen Transportfahrzeugs, beispielsweise eines Lastkraftwagens aufweisen, so daß zum Aufladen der Stähle von
dem Ablagetisch auf das Transportfahrzeug nur noch ein geringfügiges Anheben und Schwenken der Stähle erforderlich
ist. Mit Hilfe der Transporteinrichtung des Ablagetisches
können die einzelnen Kommissionen ständig in Richtung der
dem Transportfahrzeug zugewandten Seite verschoben werden,
so daß sie von dort verladen und auf der gegenüberliegenden
Seite neue Kommissionen zusammengestellt werden können. Beide
Vorgänge sind voneinander unabhängig.

Anstelle von zwei Trägern kann der Ablagetisch auch drei Träger aufweisen, deren mittlerer vorzugsweise näher zu dem einen seitlichen Träger liegt als zu dem anderen. Auf diese Weise können längere Stähle über alle drei Träger gelegt werden, während kürzere Stähle jeweils durch zwei nebeneinander liegende Träger aufgenommen werden.

Die Transporteinrichtung des Ablagetisches wird vorzugsweise durch zwei unabhängig voneinander bewegliche Schlitten gebildet, die zwei parallel zu den Trägern verlaufende und zu diesen verschiebbare Profile aufweisen, deren obere Oberfläche oberhalb der oberen Oberfläche der Träger liegt und deren Querschnittsprofil in einer senkrecht zu den Trägern verlaufenden Ebene derart ausgebildet ist, daß die Schlitten übereinander hinweg verschiebbar sind. Auf diese Weise kann der jeweils mit einer Kommission beladene Schlitten in Richtung der Verladeseite des Ablagetisches verschoben werden, während der zunächst dort befindliche Schlitten in Gegenrichtung zur Aufnahme einer neuen Kommission zurückgeschoben wird. Die Schlitten können also ständig alternativ mit weiteren Kommissionen gefüllt und entladen werden.

Bei einer anderen Ausführungsform der Erfindung ist nur ein parallel zu den Trägern geführter Schlitten vorgesehen, dessen obere Oberfläche über die obere Oberfläche der Träger anhebbar und unter diese Oberfläche absenkbar ist. Dieser Schlitten kann zum Vorrücken von Stählen in Richtung der Verladeseite unter die Stähle gefahren, angehoben, vorgeschoben, abgesenkt und zurückgeführt werden.

Im folgenden werden bevorzugte Ausführungsbeispiele der Erfindung anhand der beigefügten Zeichnung näher erläutert.

Fig. 1     ist eine schematische Seitenansicht einer Ausführungsform der erfindungsgemäßen Hebebühne;

Fig. 2                    zeigt eine entsprechende Vorderansicht;

Fig. 3 und 4              sind Seiten- und Vorderansicht einer
                         anderen Ausführungsform der Hebebühne;

Fig. 5                    ist eine Teildraufsicht auf die Rollenbahn und die Ablagefläche des Tisches;

Fig. 6                    ist eine Seiten-Teilansicht einer Bündelungsvorrichtung in Verbindung mit
                         dem Tisch;

Fig. 7                    zeigt eine Einzelheit zu Fig. 6 in einer
                         anderen Betriebsstellung;

Fig. 8                    veranschaulicht Teile einer Umreifungsvorrichtung;

Fig. 9 und 10             sind zwei zueinander senkrechte Ansich-
                         ten einer Schubvorrichtung in Verbin-
                         dung mit der Rollenbahn;

Fig. 11                   veranschaulicht die Schienenführung
                         des Wagens in Verbindung mit der Fundament-Konstruktion des Regallagers;

Fig. 12                   ist eine perspektivische Gesamtdarstellung einer ersten Ausführungsform eines
                         Ablagetisches;

Fig. 13                   ist ein schematischer Querschnitt
                         durch den Bereich eines Trägers;

Fig. 14                   ist eine vereinfachte Seitenansicht
                         des Ablagetisches gemäß Fig. 12;

Fig. 15                     zeigt eine entsprechende Seitenansicht
                            einer weiteren Ausführungsform der Erfindung;

Fig. 16                     ist ein Querschnitt durch den Bereich
                            des Trägers gemäß Fig. 15.

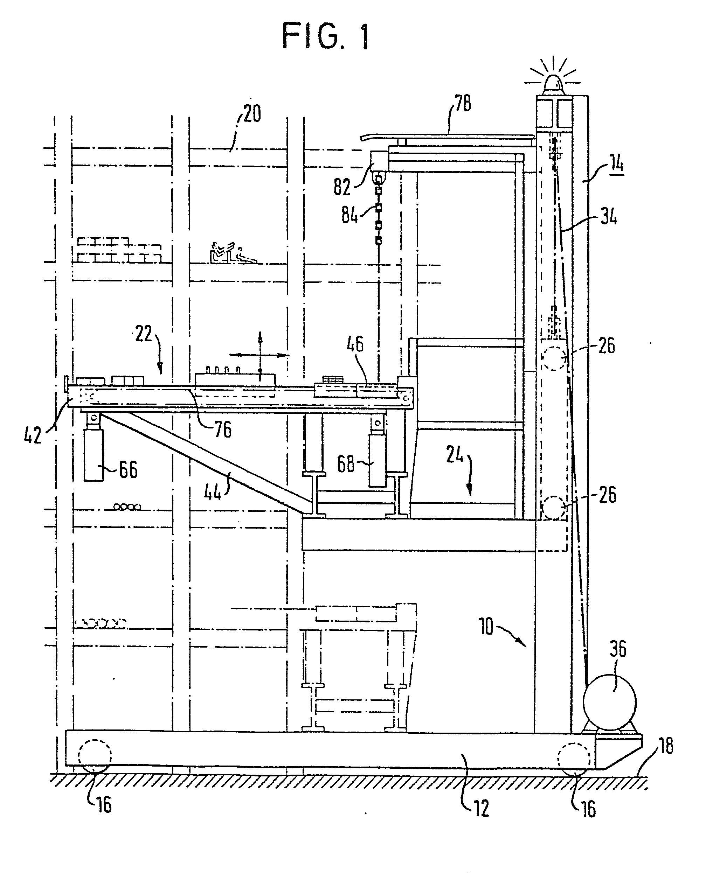

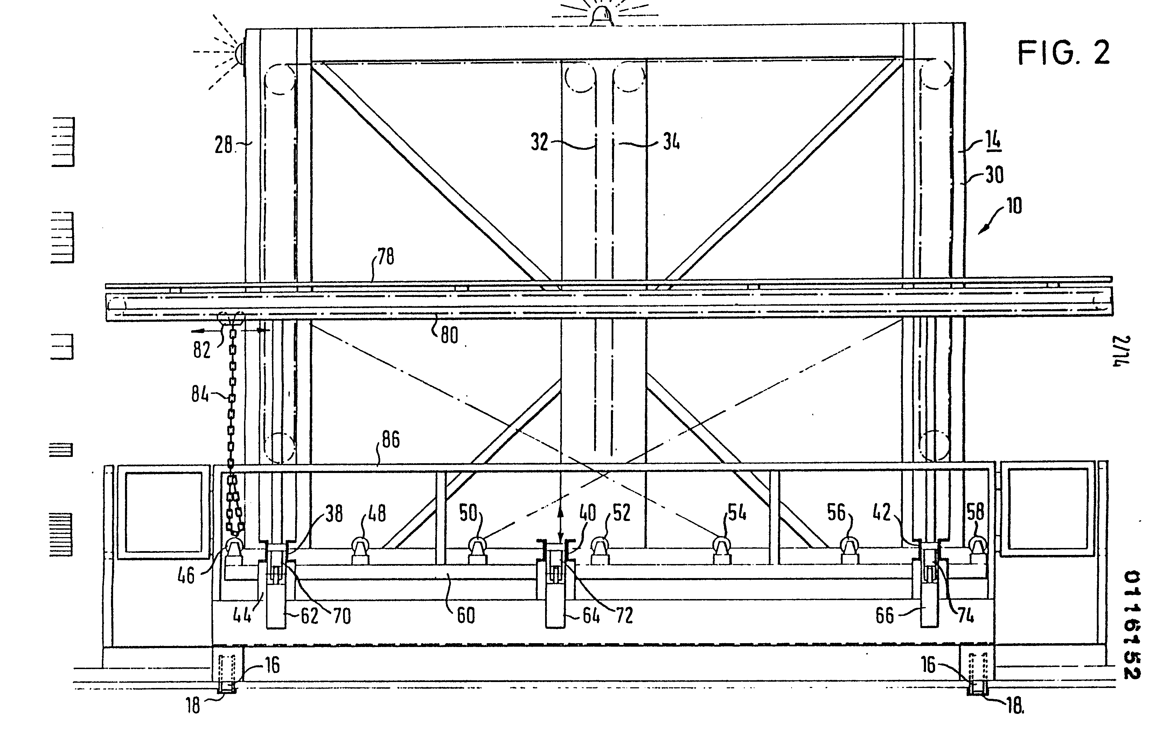

Fig. 1 und 2 zeigen eine Ausführungsform einer erfindungsgemäßen Hebebühne mit einem Wagen 10, der eine Anzahl von miteinander verbundenen, waagerechten, in Bodennähe liegenden
Trägern 12 und einen senkrecht von dem Wagen aufragenden Rahmen 14 umfaßt. An den Trägern 12 sind Rollen 16 gelagert, die
auf Schienen 18 am Boden einer Halle abrollen. Mit Hilfe der
Rollen 16 und eines nicht gezeigten Antriebs ist der Wagen
entlang der Entnahmeseite eines Regals verfahrbar, das im Hintergrund in Fig. 1 strichpunktiert angedeutet und mit 20 bezeichnet ist.

An dem Rahmen 14 ist in senkrechter Richtung beweglich eine
Bühne angeordnet, die einen Tisch 22 zur Aufnahme von Stählen
und eine unterhalb der Tischebene liegende Arbeitsplattform
24 zur Aufnahme des Bedienungspersonals umfaßt. Diese Anordnung ist mit Hilfe von Rollen 26 in senkrechten Stützen 28,30
des Rahmens 14 geführt und mit Hilfe von Seilzügen 32,34 sowie eines Antriebsmotors 36 anhebbar und absenkbar.

Die Hebebühne wird üblicherweise in einer Gasse zwischen zwei
Lagerregalen zur Bedienung beider Lagerregale angeordnet und
ist daher weitgehend symmetrisch in bezug auf die Längsmittelachse dieser Gasse ausgebildet. Der Tisch 22 erstreckt sich im
wesentlichen über die gesamte Breite der Gasse und umfaßt eine Anzahl
von waagerecht vorspringenden Tragarmen 38,40,42, die sich parallel zur
Bewegungsrichtung der Hebebühne erstrecken. Die Tragarme bilden eine Ablagefläche, die sich - aus der Sicht eines Bedienungsmannes auf der Arbeitsplattform 24 - vor der Arbeitsplattform befindet. Die vorderen Enden
der Träger sind über Diagonalstreben 44 an der Bühne im Bereich der Arbeitsplattform abgestützt. Die Tragarme bestehen, wie aus Fig. 2 hervorgeht, jeweils aus zwei paarweise angeordneten, mit den offenen Seiten
nach außen weisenden C-Profilen.

In einem entlang der Arbeitsplattform 24 verlaufenden Randstreifen der durch die Tragarme gebildeten Ablagefläche befindet sich eine Rollenbahn, die durch eine Anzahl von parallelen Rollen 46,48,50,52,54,56,58 gebildet wird, die auf einem gemeinsamen Rahmen 60 gelagert sind. Die durch die Rollen gebildete gemeinsame Lauffläche kann durch Verfahren des Wagens 10 und durch Anheben oder Absenken der Bühne vor jedes Fach des Lagerregals 20 gebracht werden. Die Rollen sind gemäß Fig. 1 in zwei Teilrollen unterteilt, so daß zwei gesondert nutzbare Rollenbahnen entstehen.

Unterhalb der Tragarme 38,40,42 befinden sich Hydraulik-Zylinder 62,64,66,68, die es gestatten, in den Tragarmen 38,40,42 geführte Trägerprofile 70,72,74 anzuheben oder abzusenken. Dadurch gelangen die oberen Oberflächen der Trägerprofile wahlweise über oder unter die obere Oberfläche der Rollen bzw. der Tragarme. Im übrigen sind die Trägerprofile mit Hilfe eines Kettentriebes 76 in Längsrichtung der Träger 38,40,42 beweglich. Sie bilden daher einen Querförderer, der es gestattet, auf den Rollen liegende Stähle von diesen abzuheben, quer zu ihrer Längsrichtung über die Tragarme zu verschieben und an anderer Stelle auf den Tragarmen abzulegen. Dadurch kann eine verhältnismäßig umfangreiche Kommission auf der Bühne zusammengestellt werden, ohne daß es notwendig ist, zu einem Transportfahrzeug oder einem Ablagetisch zwischenzeitlich zurückzukehren.

Wie weiterhin aus Fig. 1 hervorgeht, befindet sich oberhalb der Arbeitsplattform 24 eine Abdeckung 78, die als Schutz für das Bedienungspersonal gegen herabfallende Gegenstände dient. Am vorderen Rand der Abdeckung 78 und oberhalb der Rollenbahn ist eine Laufschiene 80 einer Laufkatze 82 befestigt. Eine von der Laufkatze 82 gezogene Kette 84 gestattet es, schwere Stähle aus dem Lagerregal 20 heraus auf die Rollenbahn zu ziehen oder in das Regal hineinzuschieben.

Die Arbeitsplattform 24, die mit einem umlaufenden Geländer 86 versehen ist, verläuft O-förmig um die Rollenbahn herum, so daß das Bedienungspersonal auf beiden Seiten unmittelbar an die Entnahmeseite des Regals herantreten kann.

Der die Rollen 46 bis 58 tragende Rahmen 60 ist in bezug auf die Bühne mit Hilfe nicht gezeigter Zugmeßdosen abgestützt, die einer Wiegevorrichtung zugeordnet sind, die es gestattet, das Gewicht einzelner Stäbe oder Kommissionen unmittelbar auf den Rollen festzustellen.

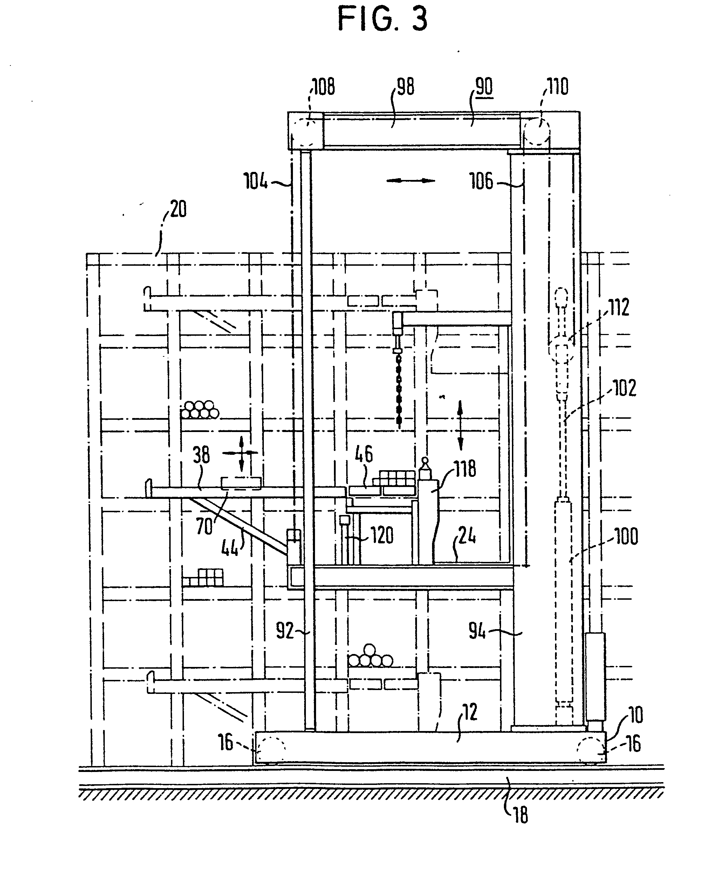

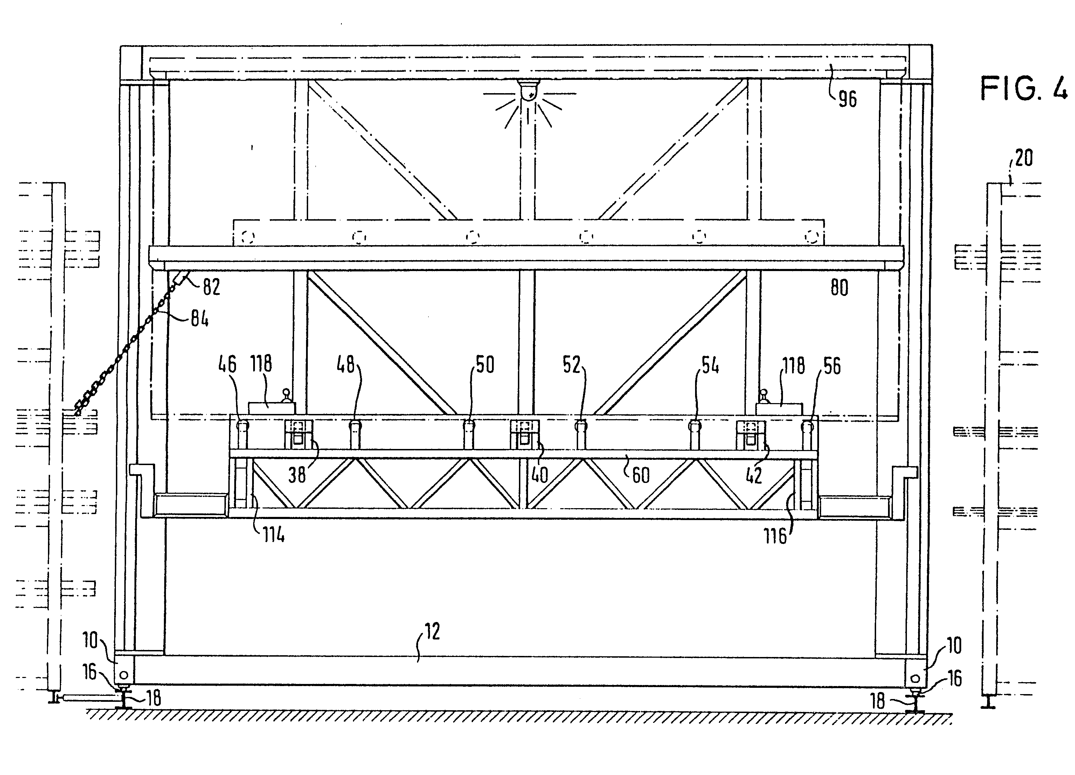

Fig. 3 und 4 sind Seiten- und Vorderansicht einer weiteren Ausführungsform einer erfindungsgemäßen Hebebühne. Gleiche oder entsprechende Teile tragen dieselben Bezugsziffern wie in Fig. 1 und 2.

Gemäß Fig. 3 und 4 ist die anhebbare und absenkbare Bühne an einem Rahmen 90 geführt, der zwei vordere Stützen 92 und zwei hintere Stützen 94 umfaßt, die durch Traversen 96,98 in einem Rechteckverband verbunden sind. Durch diese Art der Führung ergibt sich eine bessere Stabilität und genauere Führung der Bühne. Der Hubantrieb umfaßt einen senkrecht auf dem Wagen befestigten Hydraulikzylinder 100, dessen Kolbenstange 102 Seile 104,106 bewegt, die über Rollen 108,110,112 geführt sind. Aus der Art der Anordnung der Seile und Rollen ergibt sich ein Übersetzungsverhältnis von 2 : 1, d.h., die Bühne wird um den doppelten Betrag des entsprechenden Kolbenhubes angehoben oder abgesenkt. Die oberen und unteren Endstellungen der Bühne sind in Fig. 3 schematisch angedeutet.

Aus Fig. 4 geht hervor, daß der Rahmen 60 zur Aufnahme der Rollen 46,48,50..., die die Rollenbahn bilden, als Diagonal-Fachwerk ausgebildet ist. Der Rahmen 60 ist über Zugmeßdosen 114,116 an der Bühne abgestützt. Zugmeßdosen ermöglichen eine selbsttätige Zentrierung und erleichtern die Eichung der Wiegevorrichtung. Im Bereich zwischen der Arbeitsplattform 24 und der Rollenbahn befindet sich ein Schaltpult 118.

Gemäß Fig. 3 befinden sich im Bereich zwischen der Rollenbahn und den Tragarmen 38,40,42 senkrechte Hydraulikzylinder
120, die zu einer Bündelungsvorrichtung gehören, auf die
später näher eingegangen werden soll.

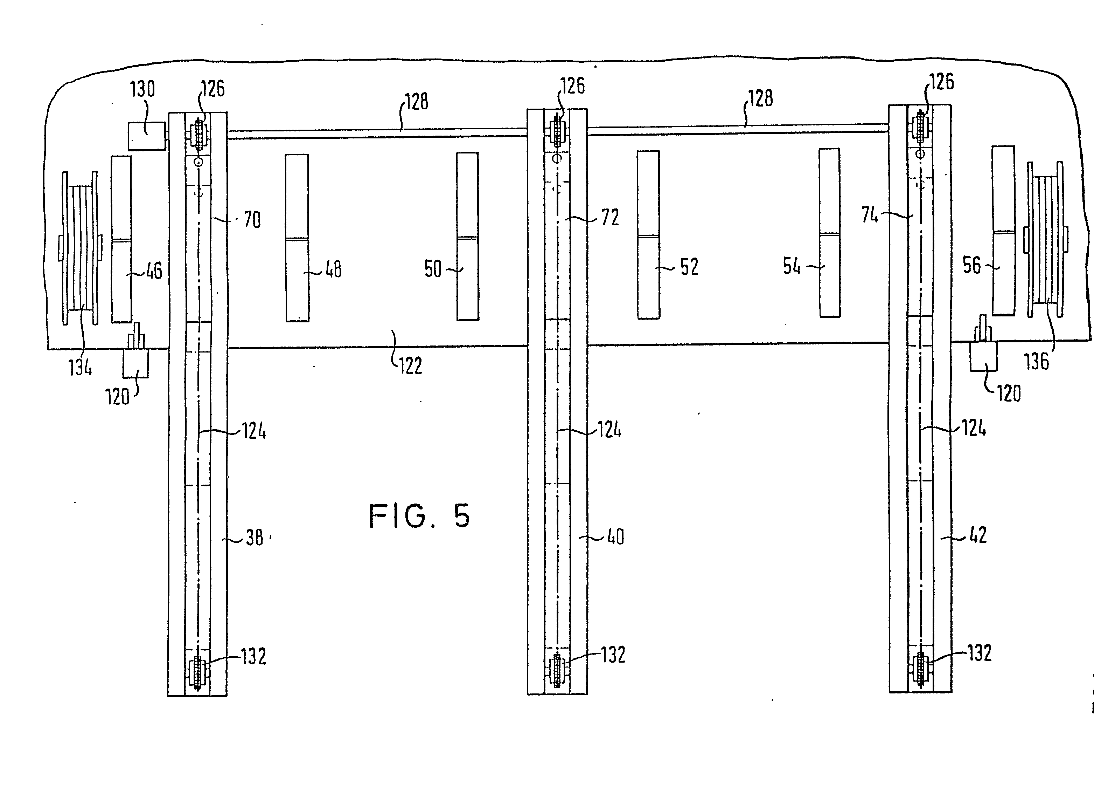

Zur ergänzenden Erläuterung zeigt Fig. 5 eine Draufsicht
auf drei Tragarme 38,40,42, die gemeinsam eine Ablage vor
der mit 122 bezeichneten Rollenbahn bilden. Wie bereits erwähnt wurde, bestehen die Tragarme 38,40,42 aus jeweils
zwei nach außen offenen C-Profilen, zwischen denen Trägerprofile 70,72,74 verschiebbar angeordnet sind, die jeweils
mit Antriebsketten 124 in Verbindung stehen, die jeweils
mit Hilfe von Zahnrädern 126 über eine gemeinsame Welle
128 synchron angetrieben werden. Die Welle 128 steht mit
einem Antriebsmotor 130 in Verbindung. An den freien Enden
der Tragarme 38,40,42 sind weitere, freilaufende Kettenräder
132 zur Umlenkung der endlosen Ketten vorgesehen. Wie bereits erwähnt wurde, laufen die Trägerprofile 70,72,74 in
Führungen, die mit Hilfe von Hydraulikzylindern 66,68
anhebbar und absenkbar sind.

Fig. 5 zeigt im übrigen zwei Hydraulikzylinder 120, die zu
der bereits erwähnten Bündelungseinrichtung gehören und
später noch einmal erläutert werden sollen. Ferner sind
an den beiden Enden der Rollenbahn 122 Bandrollen 134,136
zur Abgabe eines Umreifungsbandes vorgesehen. Auch insoweit
sollen weitere Erläuterungen folgen.

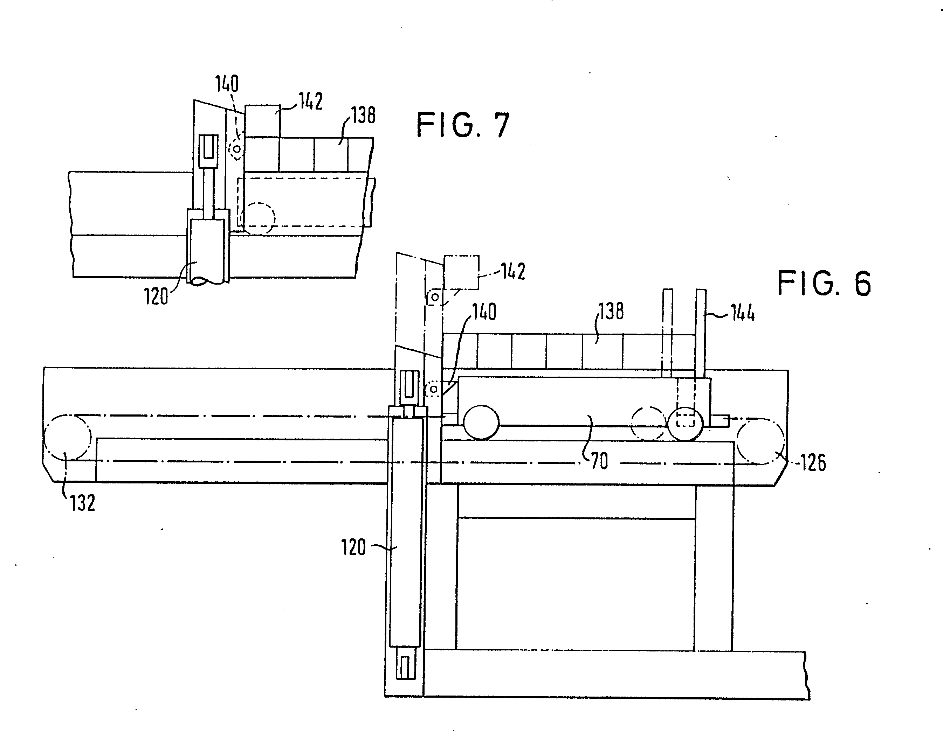

Fig. 6 und 7 zeigen Einzelheiten einer Bündelungsvorrichtung,
die dazu dient, ein Bündel aus zunächst im wesentlichen flach
auf den Rollen verteilten Stählen 138 mit einem im wesentlichen runden Gesamtquerschnitt zu versehen. Zu diesem Zweck
ist an dem bereits erwähnten, vor der Rollenbahn angeordneten Hydraulikzylinder eine Klinke 140 vorgesehen, die am oberen Ende der Kolbenstange des Hydraulikzylinders 120 befestigt ist und durch Schwerkraftwirkung in die in Fig. 6 gezeigte Stellung herabfällt, beim Absenken der Kolbenstange und Auftreffen der Klinke auf ein Hindernis jedoch gemäß Fig. 7 angehoben wird. Bei der Auf- und Abbewegung der Kolbenstange des Hydraulikzylinders 120 nimmt die Klinke jeweils einen Stahl 142 mit nach oben, so daß er auf die übrigen Stähle 138 herabfällt. In das Trägerprofil 70 des Querförderers innerhalb der Tragarme 38,40,42 ist ein senkrechter Anschlagbolzen 144 eingesetzt, so daß bei Verschiebung des Querförderers nach links in Fig. 6 die Stähle 138 gegen den zuvor beschriebenen Hydraulikzylinder 120 geschoben und dort laufend von der Klinke 140 angehoben werden. Dadurch ergibt sich eine für die Umreifung günstigere Querschnittsform des Stahlbündels.

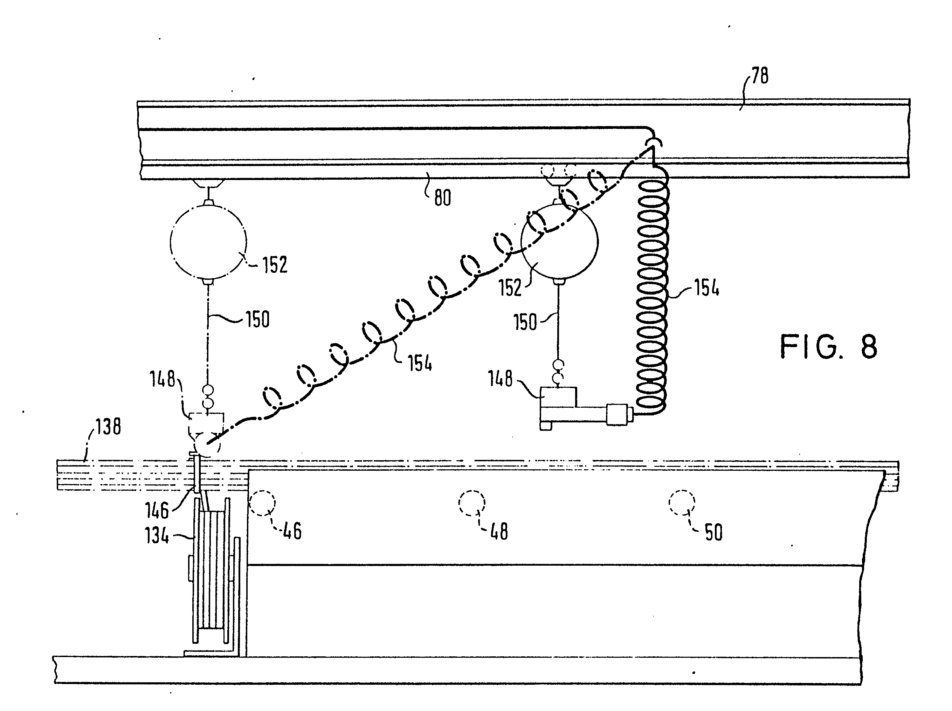

Fig. 8 veranschaulicht Teile einer Umreifungsvorrichtung für das auf diese Weise gebildete Bündel. Von den bereits erwähnten Bandrollen 134,136 wird ein Blechband 146 abgezogen und um die Stähle 138 herumgelegt. Eine herkömmliche Umreifungsvorrichtung 148 schließt das Blechband 146, verbindet dessen Enden und trennt es ab. Die Umreifungsvorrichtung 148 ist über ein Seil 150 mit Federtrommel 152 an der Laufschiene 80 der Abdeckung 78 aufgehängt. Ein denhbares Wendelkabel 154 dient zur Stromzufuhr.

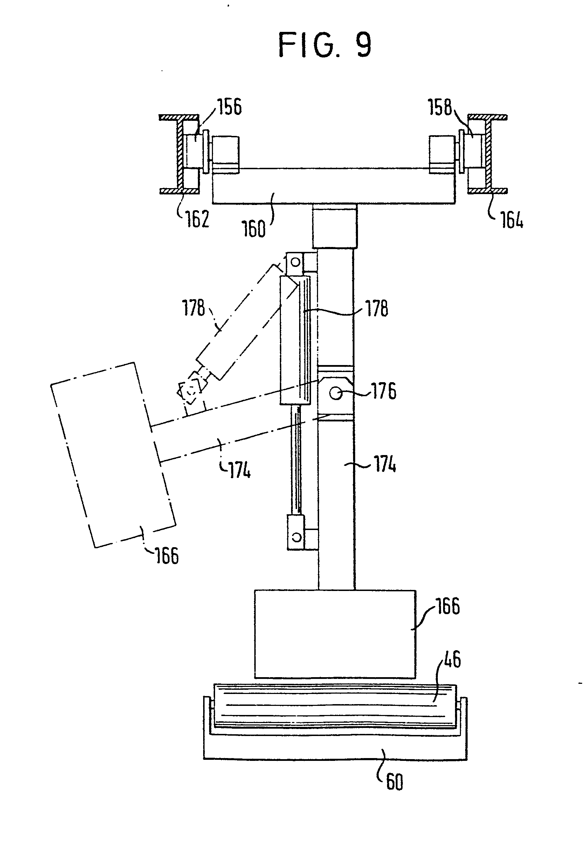

Fig. 9 veranschaulicht eine Ausführungsform der Erfindung, bei der anstelle der zuvor erläuterten Laufkatze 82 ein mit vier Rollen 156,158 versehener Schlitten 160 vorgesehen ist, der in zwei Schienen 162,164 läuft, die an der oberen Abdeckung 78 oberhalb der Arbeitsplattform 24 befestigt sind. Durch die Verwendung dieses Schlittens 186 ergibt sich gegenüber der Laufkatze eine wesentlich stabilere Konstruktion, die die Aufbringung größerer Kräfte beim Herausziehen oder Einlagern von Stählen ermöglicht.

Der Schlitten 160 nimmt im übrigen zusätzlich zu einer in Fig. 9 nicht gezeigten Kette zum Ziehen von Stählen eine Schubvorrichtung auf, die es gestattet, Stähle in ein Regalfach hineinzuschieben.

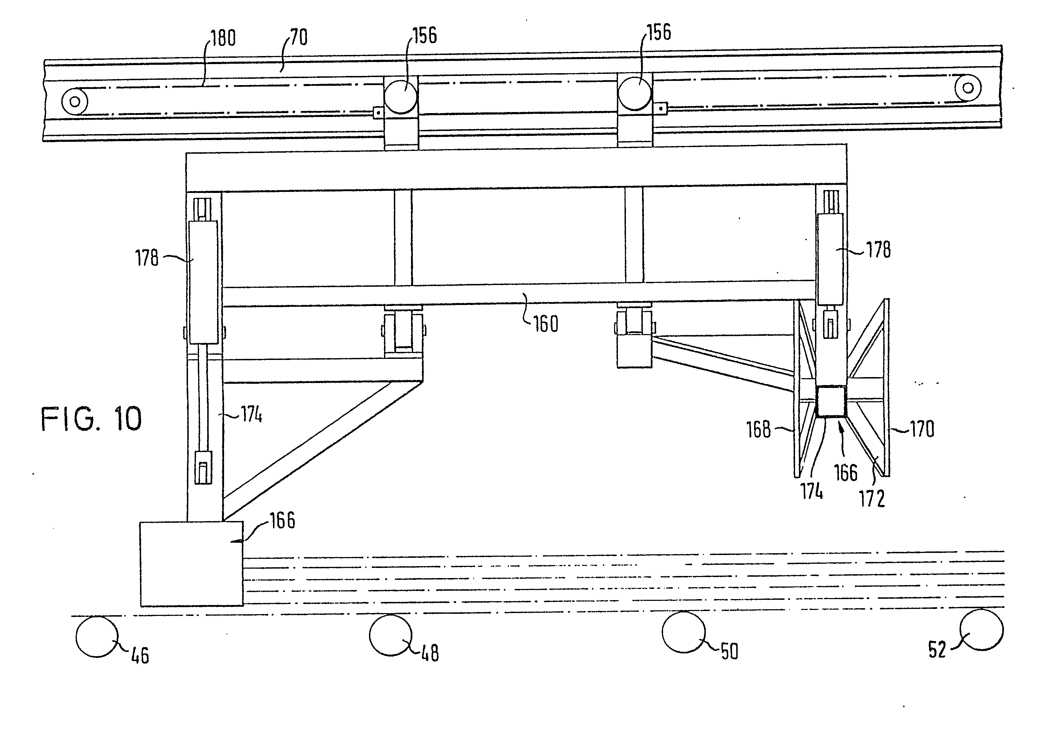

Wie aus Fig. 9 und 10 hervorgeht, umfaßt diese Schubvorrichtung ein Kopfstück 166 mit beidseitigen Druckplatten 168,170, die über eine Stützkonstruktion 172 miteinander und mit einem Schwenkarm 174 verbunden sind. Der Schwenkarm 174 besitzt die Form eines Dreieckslenkers und ist in bezug auf den Schlitten 160 um eine Achse 176 schwenkbar. Die Schwenkung erfolgt mit Hilfe eines Hydraulikzylinders 178, der schwenkbar mit dem Schwenkarm 174 und dem Schlitten 160 andererseits verbunden ist. Durch Betätigung des Hydraulikzylinders 178 kann das Kopfstück 166 entweder in die in Fig. 9 gezeigte durchgezogene Stellung oberhalb der Rollen 46,48..., oder in eine angehobene, strichpunktiert dargestellte Stellung bewegt werden. In der unteren Stellung oberhalb der Rollenbahn erfaßt das Kopfstück 166 gemäß Fig. 10 die Stähle 138 von der Stirnseite her. Die Verschiebung des Schlittens 160 erfolgt über dessen Kettentrieb 108.

Über die zuvor beschriebenen Zusatzeinrichtungen der Bühne hinaus können beispielsweise an den beiden Enden der Rollenbahn zusätzliche Rollen vorgesehen sein, die den Abstand zu den Regalfächern überbrücken und aus ihrer Betriebsposition, in der sie die Rollenbahn verlängern, in eine Ruheposition geklappt werden können. Es kann eine elektrische Schaltung vorgesehen sein, die bewirkt, daß in der Betriebsstellung dieser klappbaren Rollen der Fahrantrieb des Wagens unterbrochen ist, so daß beim Ein- und Auslagern der Stähle eine Betätigung dieses Fahrantriebes aus Sicherheitsgründen ausgeschlossen ist.

Die Antriebssteuerung des Wagens und der Hubvorrichtung der Bühne kann derart ausgeführt sein, daß der Wagen mit Hilfe von Endschaltern in einer auf eine Fachreihe ausgerichteten Position automatisch angehalten werden kann und die Bühne darüber hinaus in entsprechender Weise automatisch anhebbar und absenkbar ist. Es liegt auf der Hand, daß eine derartige Steuerung weiter ergänzt und verfeinert werden kann, so daß beispielsweise eine vollautomatische Fachanfahrsteuerung möglich ist, die ggf. sogar auf die Kodierung einer Lochkarte oder dergleichen ansprechen kann, die bei Auftragseingang hergestellt wird. Eine entsprechende Automatisierung ist beim Zählen und/oder Wiegen der entnommenen Stähle einer Kommission möglich.

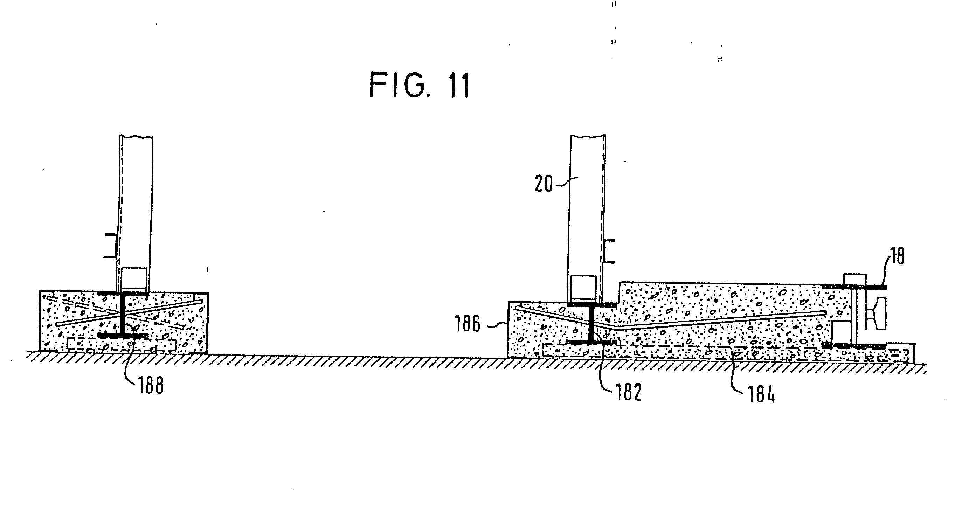

Fig. 11 zeigt einen Querschnitt durch eine Schiene 18 des Wagens 10 in Verbindung mit der Fundament-Konstruktion des angrenzenden Lagerregals 20. Während bei der Ausführungsform gemäß Fig. 1 und 2 davon ausgegangen worden ist, daß bei einer neu hergestellten Halle die Schienen und die Regal-Fundamente in den Boden eingelassen werden können, beziehen sich Fig. 3 und 4 auf den in der Praxis häufigen Fall, daß das erfindungsgemäße System auf dem Boden einer fertigen Halle zu errichten ist. In einem derartigen Fall wird die durch einen Doppel-T-Träger gebildete Schiene 18 zusammen mit einem entsprechenden, kleineren, Doppel-T-Träger 182 auf einer Stützkonstruktion 184 auf dem Hallenboden verlegt und von Schalungselementen 186 eingefaßt. Sodann wird diese Konstruktion mit Beton verfüllt. Auf diese Weise ergibt sich eine ausreichende Druckverteilung auf dem Boden der vorhandenen Halle und eine stabile Abstützung für das Regal und die Hebebühne. Für die rückwärtigen Stützen des Regals werden weitere Doppel-T-Träger 188 entsprechend verlegt.

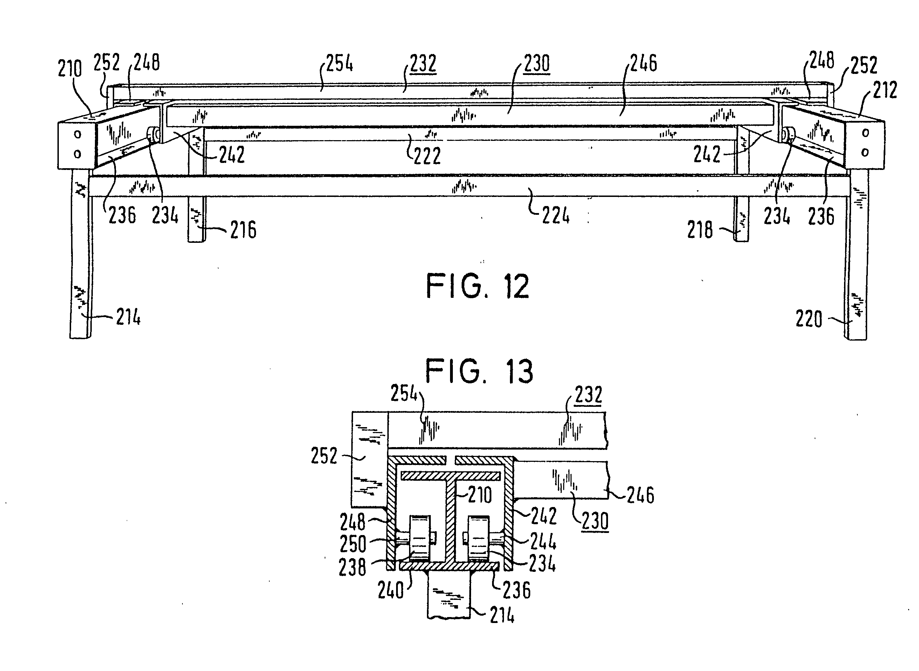

Figur 12 zeigt eine erste Ausführungsform eines Ablagetisches in einer perspektivischen Darstellung von einer der Stirnseiten her, also beispielsweise von der Verlade-

- 14 -

seite aus. Zwei seitliche Träger 210,212 mit I-Querschnitt sind im Bereich ihrer Enden jeweils durch Stützen 214,216,218,220 abgestützt. Die Stützen sind jeweils
paarweise durch Querstreben 222,224 verbunden. Darüber
hinaus können weitere, nicht gezeigte Diagonal-Verstrebungen vorgesehen sein. An den stirnseitigen Enden der
Träger 210,212 befinden sich Anschlußplatten 226,228,
die zur Begrenzung der Verschiebung der im folgenden erläuterten Schlitten dienen.

Auf dem Ablagetisch befinden sich zwei unabhängig voneinander in Längsrichtung der Träger 210,212 verschiebbare Schlitten, die in Fig. 12 insgesamt mit 230 und 232
bezeichnet sind. Der erste Schlitten 230 stützt sich
über Laufrollen 234 auf dem unteren, inneren Flansch
236 des Trägers 210 ab und soll daher als innerer Schlitten bezeichnet werden, während der zweite Schlitten 232
gemäß Fig. 13 über Laufrollen 238 auf dem unteren äußeren
Flansch 240 des Trägers 210 geführt ist und als äußerer
Schlitten bezeichnet werden soll. Der Schlitten 230
umfaßt ein den Träger 210 von innen her bis etwa zur
Längsmittellinie des Trägers übergreifendes, im Querschnitt L-förmiges Profil 242, an dem gemäß Fig. 13 die
Laufrollen 234 über Achsen 244 geführt sind. Die beiderseitigen Profile 242 dienen beim Kommissionieren als Auflagefläche für die Stähle. Die beiderseitigen Profile
242 sind über senkrecht zu den Trägern 210 verlaufende Streben 246 miteinander verbunden.

Der äußere Schlitten 232 umfaßt entsprechende, die Träger 210 von außen bis etwa zu deren Längsmittellinie
übergreifende Profile 248, die auf ihren senkrechten Innenflächen die Laufrollen 238 über Achsen 50 tragen. Die
Profile 248 des äußeren Schlittens 232 sind untereinander über senkrechte, auf den Außenseiten der Profile befestigte Zwischenstücke 252 und quer über die Träger 210
verlaufende Streben 254 verbunden.

Aus Fig. 13 geht hervor, daß die Streben 246 des inneren Schlittens 230 von den einander zugewandten inneren Flächen der Profile 242 ausgehen, während die Streben 254 des äußeren Schlittens 232 frei oberhalb der Profile 242, 248 und der Streben 246 verlaufen. Die Schlitten 230,232 können daher vollständig unabhängig voneinander und auch übereinander hinweg auf dem Ablagetisch verschoben werden.

Die Profile 242,248 sind in ihrer Länge derart bemessen, daß sie die Aufnahme einer üblichen Kommission gestatten. Wenn ein Schlitten auf der Kommissionierungsseite mit Stählen gefüllt ist, wird er in Richtung der Verladeseite verschoben, während der inzwischen entladene andere Schlitten in Gegenrichtung zurückgeschoben wird und für eine weitere Kommission verwendet werden kann.

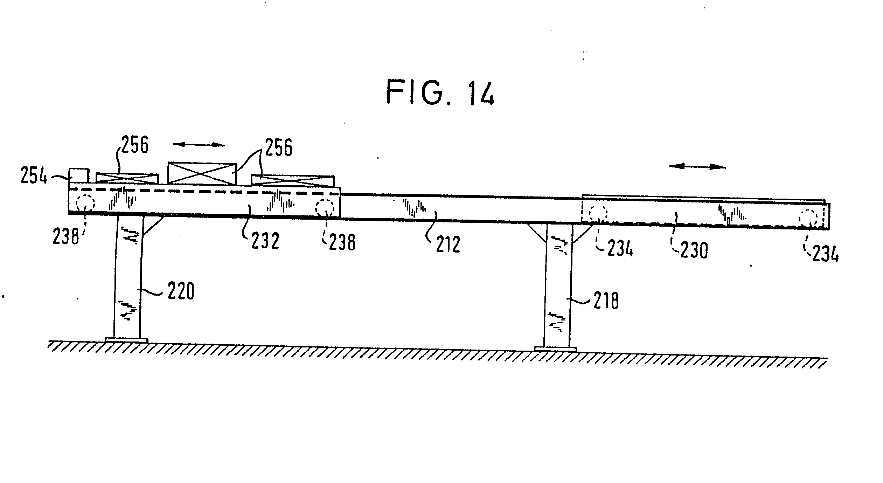

In Fig. 14 ist der Ablagetisch zusammen mit den beiden Schlitten 230,232 in einer vereinfachten Seitenansicht dargestellt. Der innere Schlitten 230 befindet sich in Fig. 14 am rechten Ende des Ablagetisches und der äußere Schlitten 232 am linken Ende. Auf dem äußeren Schlitten 232 befindet sich eine Kommission 256 zur Verladung auf einem Transportfahrzeug. Die Träger 212 ragen gemäß Fig. 14 nach rechts über die Stützen 216,218 hinaus, so daß eine fahrbare Hubbühne von rechts her beim Ablegen der Stähle unter den Ablagetisch fahren kann.

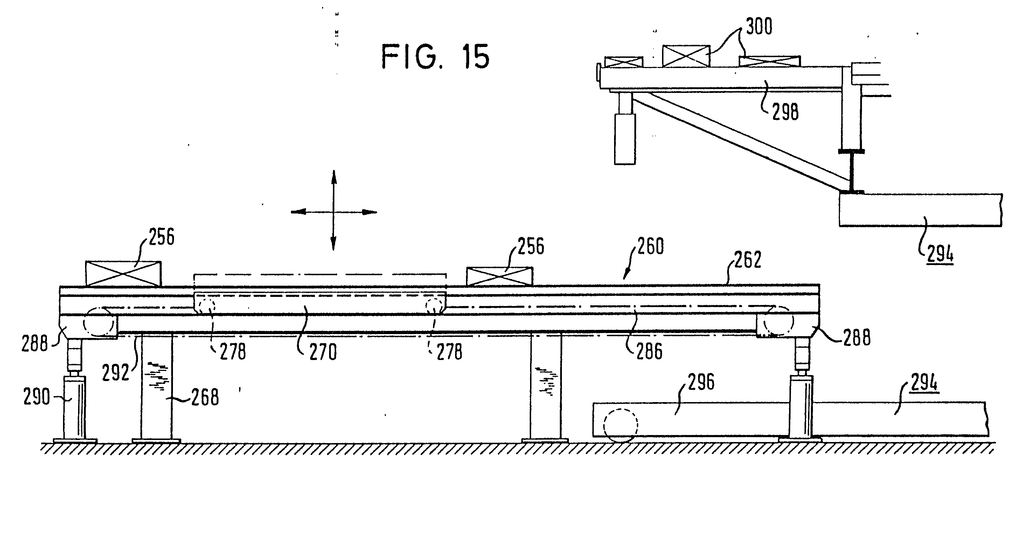

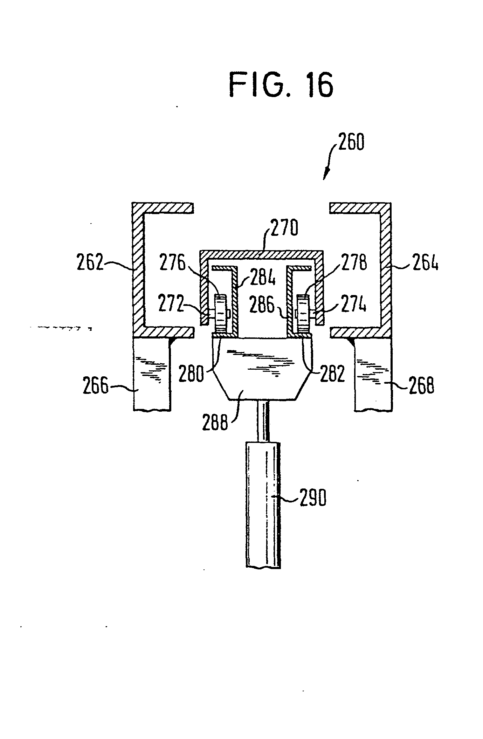

Fig. 15 und 16 zeigen eine weitere Ausführungsform der Erfindung in der Form eines Ablagetisches mit nur einem Schlitten. Wie aus dem in Fig. 16 gezeigten Querschnitt hervorgeht, bestehen die mit 260 bezeichneten Träger in diesem Falle aus zwei gesonderten C-Profilen 262,264, die mit den offenen Seiten einander zugewandt und über Stützen 266,268 abgestützt sind. Den Profilen 242,248 gemäß Fig. 12 bis 14 entsprechen in diesem Falle mit der offenen Seite nach unten angeordente U-Profile, die an den einander gegenüberliegenden Innenflächen der senkrechten Flansche über Achsen 272,274 Laufrollen 276,278 tragen. Die Laufrollen 276,278 laufen auf den unteren, waagerechten Flanschen 280,282 von C-Profilen 284,286, deren offene Seiten nach außen gerichtet sind und die an ihren Enden auf Kopfstücken 288 befestigt sind. Die C-Profile 284,286 dienen somit als Führungsschienen für die Längsverschiebung der U-Profile 270. Die Kopfstücke 288 werden durch Hydraulikkolben 290 abgestützt, die es gestatten, die C-Profile 284,286 und die durch diese geführten U-Profile 270 über die obere Oberfläche des durch die C-Profile 262 und 264 gebildeten Trägers 260 anzuheben oder unter diese Oberfläche abzusenken. Die in den Trägern 260 liegenden U-Profile 270 können also jeweils in abgesenkter Stellung unter eine Kommission gefahren, angehoben, mit der Kommission in eine beliebige Position verschoeben und anschliessend zur Freigabe der Kommission wieder abgesenkt werden.

Die Längsverschiebung der U-Profile 270 erfolgt vorzugsweise mit Hilfe eines in Fig. 15 strichpunktiert angedeuteten Kettentriebes 292.

In Fig. 15 ist die abgesenkte Position der U-Profile 270 in durchgezogenen Linien und die angehobene Position in strichpunktierten Linien dargestellt.

Im übrigen ist auf der rechten Seite in Fig. 15 eine fahrbare Hubbühne 294 angedeutet. Ein Fahrgestell 296 der Hubbühne ist unter die nach rechts überkragenden Enden der Träger 260 verfahrbar. Die Hubbühne umfaßt im ürigen anhebbare und absenkbare Tragarme 298 zur Aufnahme einer Kommission 300. Die Tragarme 298 können unter die Ebene der Träger 260 zum Ablegen der Kommission auf dem Ablagetisch abgesenkt werden.

## PATENTANSPRÜCHE

1. Vorrichtung zur Einlagerung und Entnahme von stangenförmigem Material in bzw. aus wenigstens einem Lagerregal, mit einem entlang der Entnahmeseite des Lagerregals verfahrbaren Wagen, einer in bezug auf diesen anhebbaren und absenkbaren Bühne und einer Ablage zur Aufnahme des ausgelagerten Stahls bei der Kommissionierung, dadurch g e k e n n z e i c h n e t, daß die Bühne einen Tisch (22) mit einer senkrecht zur Entnahmeseite des Lagerregals (20) gerichteten, auf parallelen Rollen (46,48 ... 58) gebildeten Rollenbahn und einer entlang einer Seite der Rollenbahn verlaufenden, durch auskragende Tragarme (38;40,42) gebildeten Ablagefläche umfaßt, daß entlang der anderen Seite der Rollenbahn eine Arbeitsplattform (24) vorgesehen ist, und daß die Bühne mit dem Tisch (22) und der Arbeitsplattform (24) an einem senkrecht aufragenden Rahmen (14) des Wagens (10) aufwärts und abwärts verschiebbar geführt ist.

2. Vorrichtung nach Anspruch 1, g e k e n n z e i c h n e t durch einen Querförderer, der in die Tragarme (38,40, 42) des Tisches (22) integriert ist und in Längsrichtung der Tragarme verschiebbare Trägerprofile (70,72,74) umfaßt, die über die obere Oberfläche der Rollen (46 ... 58) anhebbar und unter diese absenkbar sind.

3. Vorrichtung nach Anspruch 1 oder 2, dadurch g e k e n n z e i c h n e t, daß die Rollen (46 ... 58) der Rollenbahn über einen gemeinsamen Rahmen (60) an Druck- oder Zugmeßdosen einer Wiegevorrichtung aufgehängt sind.

4. Vorrichtung nach einem der Ansprüche 1 bis 3, g e - k e n n z e i c h n e t durch eine oberhalb der durch die Rollen (46 ... 58) gebildeten Rollenbahn angeordnete, quer zur Bewegungsrichtung des Wagens (10) verfahrbare Laufkatze (82,160) zum Erfassen von Stählen bei der Einlagerung bzw.

Entnahme in bezug auf das Regal.

5. Vorrichtung nach einem der Ansprüche 1 bis 4, dadurch g e k e n n z e i c h n e t, daß der aus den Rollen (46 ... 58) gebildeten Rollenbahn eine Bündelungseinrichtung zugeordnet ist, die eine Hubvorrichtung (120,140) zum Anheben und Aufhäufen von Stählen (138,142) sowie eine Fördervorrichtung (70,144) zum Querverschieben der Stähle einer Kommission gegen die Hubvorrichtung umfaßt und wenigstens einen senkrecht angeordneten Hydraulikzylinder (120) angrenzend an die Rollenbahn aufweist, dessen Kolbenstange mit einer bei der Aufwärtsbewegung vorspringenden Klinke (140) zum Anheben der Stähle (142) verbunden ist, sowie daß den Trägerprofilen (70,72,74) des Querförderers des Tisches Mitnehmer (144) zum Verschieben der Stähle gegen den Hydraulikzylinder (120) zugeordnet sind.

6. Vorrichtung nach einem der vorhergehenden Ansprüche, dadurch g e k e n n z e i c h n e t, daß angrenzend an die Rollenbahn Bandrollen (134) zur Abgabe eines Umreifungsbandes vorgesehen sind, und daß oberhalb der Arbeitsplattform (24) ein bewegliches Umreifungsgerät (148) zum Umreifen von Stahlbündeln an einer die Arbeitsplattform (24) überdeckenden Abdeckung (78) geführt ist.

7. Vorrichtung nach einem der Ansprüche 4 bis 6, dadurch g e k e n n z e i c h n e t, daß die Laufkatze die Form eines über vier Rollen (156,158) an zwei parallelen Schienen (162,164) geführten Schlittens (160) aufweist, und daß an dem Schlitten (160) wenigstens ein schwenkbarer Schieber (166,174) angebracht ist, dessen Kopfstück (166) zwischen einer Position unmittelbar oberhalb der Rollenbahn und einer außerhalb dieser Position liegenden Ruhestellung beweglich ist.

8. Vorrichtung nach einem der vorhergehenden Ansprüche, g e k e n n z e i c h n e t durch einen Ablagetisch zur Aufnahme von Stählen nach der Kommissionierung, mit wenigstens zwei parallelen Trägern (210,212,260), jeweils wenigstens zwei diese aufnehmende Stützen (214,216,218,220, 266,268) sowie wenigstens einer Transporteinrichtung (230, 232,270) zur Parallelverschiebung von auf den Trägern liegenden Stählen.

9. Vorrichtung nach Anspruch 8, dadurch g e k e n n - z e i c h n e t, daß die Transporteinrichtung wenigstens einen Schlitten (230,232;270) aufweist, der zwei parallel zu den Trägern (210,212;260) verlaufende, gleitend in bezug auf die Träger geführte Profile (242,248;270) umfaßt, die synchron in Längsrichtung der Träger beweglich sind, miteinander durch Streben (246,254) verbunden sind und mit ihrer oberen Oberfläche über der oberen Oberfläche der Träger (210,212) liegen.

10. Vorrichtung nach Anspuch 9, dadurch g e k e n n - z e i c h n e t, daß zwei unabhängig voneinander bewegliche Schlitten (230,232) vorgesehen sind und daß der Querschnitt der Schlitten in einer senkrecht zu den Trägern (210,212) verlaufenden Ebene derart ausgebildet ist, daß die Schlitten ungehindert übereinander hinweg verschiebbar sind.

11. Vorrichtung nach Anspruch 8, dadurch g e k e n n - z e i c h n e t, daß die Profile (270) derart anhebbar und absenkbar sind, daß ihre obere Oberfläche wahlweise oberhalb oder unterhalb derjenigen der Träger (260) liegt.

12. Vorrichtung nach Anspruch 11, dadurch g e k e n n - z e i c h n e t, daß die Profile (270) mit Hilfe eines Kettentriebes (292) synchron in Längsrichtung der Träger (260) beweglich sind.

13. Vorrichtung nach Anspruch 11 oder 12, dadurch g e - k e n n z e i c h n e t, daß die Profile (270) mit Hilfe von Hydraulikzylindern (290) anhebbar und absenkbar sind.

14. Vorrichtung nach einem der Ansprüche 11 bis 13, dadurch g e k e n n z e i c h n e t, daß die Träger (260) jeweils zwei parallele, mit den offenen Seiten einander zugewandte C-Profile (262,264) umfassen, daß in dem Zwischenraum zwischen den C-Profilen parallel zu diesen verlaufende Führungsschienen (284,286) für die Profile (270) vorgesehen sind, die an beiden Enden durch jeweils einen Hydraulikzylinder (290) anhebbar und absenkbar sind, und daß die Profile (270) mit Hilfe von Laufrollen (276,278) auf nach außen weisenden Flanschen (280,282) der Führungsschienen verschiebbar sind.

FIG. 1

FIG. 2

Goldbeckbau  83  112590.1

0116152

# FIG. 3

FIG. 4

FIG. 5

5/14

0116152

FIG. 7

140  142  138

120

FIG. 6

142  138  144

140

70  126

132

120

FIG. 8

Goldbeckbau  83  112590. -

0116152

# FIG. 9

FIG. 10

FIG. 11

Goldbeckbau 83 1125:

0116152

FIG. 12

FIG. 13

Goldbeckbau 93 1125

0116152

# FIG. 14

Goldbeckbau 83 11

011615:

FIG. 15

300

298

294

256

256

260

262

294

288

278

270

278

286

288

290

292

268

296

294

# FIG. 16

260

270

262    276    278    264

284

272    286    274

280    282

266    288    268

290